# EUROPEAN PATENT APPLICATION

(11) **EP 4 119 307 A1**
(43) Date of publication of application: **18.01.2023**
(21) Application number: 21460030.6
(22) Date of filing: 14.07.2021
(51) Int. Cl.: B25J 15/00

(54) **NEEDLE GRIPPER**

(71) Applicant: UNISTAR Sp. z o.o., 44-120 Pyskowice (PL); UNIRAVEN Piotr K. Arciszewski, 44-121 Gliwice (PL)
(72) Inventor: Arciszewski, Grzegorz, 44-120 Pyskowice (PL); Arciszewski, Piotr K., 44-121 Gliwice (PL)

(57) **Abstract**

The invention relates to a needle gripper for robots, heads or machines, which consists of a rotating shaft (2) and a needle (1) whose straight part (1a) is embedded in the rotating shaft while the curved section (1b) inserting into an object. The seating of the needle in the shaft is ensured by at least one screw (3). The gripper can be extended with a second rotating shaft with a needle working in the opposite direction to the first rotating shaft. The gripper is modular and can be extended with additional needles in the shaft and with another pairs of rotary shafts.

## Description

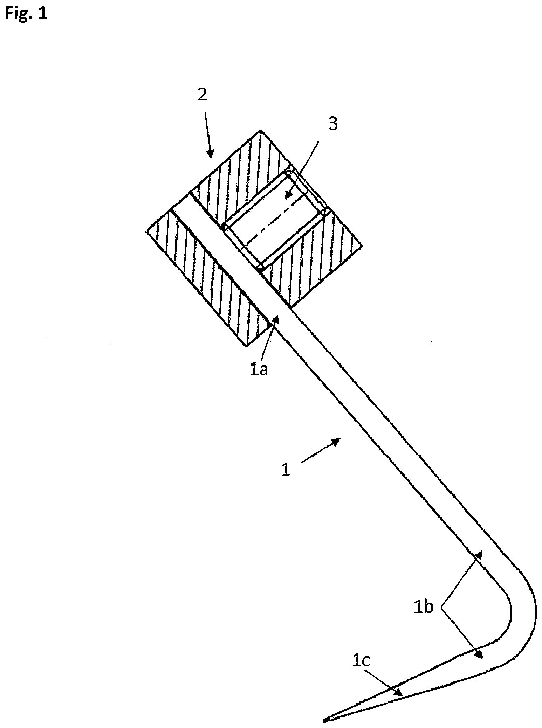

The subject of the invention is a needle gripper (Fig. 1) for gripping various workpieces by means of physical perforation of the workpiece executed by a curved sharp tip of the gripping needle, where the straight part of the needle being seated in a rotating shaft and pressed against it by at least one screw

Mechanisms using straight needles that are driven into a workpiece at an angle other than a right angle are known and are apparent from patent documents WO2015049141A1, US20130187398A1, EP3395511A1, EP3052412B1, EP2926956B1, EP2716585A2, EP1750910B1, DE202016103770U1, DE202012104275U1, DE202011110569U1, DE102015202604B4, DE102012017659A1.

A needle gripper comprising straight needles driven into the workpiece at right angles is also known and is apparent from document WO2017016121A1.

Patent applications DE102013010437A1 and DE3935513A1 refer to a mechanism with a curved needle which is attached to a rotating shaft by means of belting it and a section of the needle is inserted into the hollowed out part of the shaft.

Other applications WO2007046715A1, DE20309982U1 demonstrate the use of curved needles connected to a ball element or plate which provide non-linear motion of the needle.

An advantage of the invention includes easy replacement of the needle and its secure seating in the rotating shaft by applying pressure by means of at least one screw.

A further advantage of the invention is uncomplicated shape of the needle, which contains only one bend compared to the needle grippers with a needle that has additional bends or radii necessary for belting the rotating shaft.

Advantageous developments of the invention are set forth in the dependent claims.

If more than one clamping screw is used the needle seating in the rotary shaft is stronger.

The clamping screw may have a head or be without one. Headed screws ensure precise adjustment of the clamping pressure.

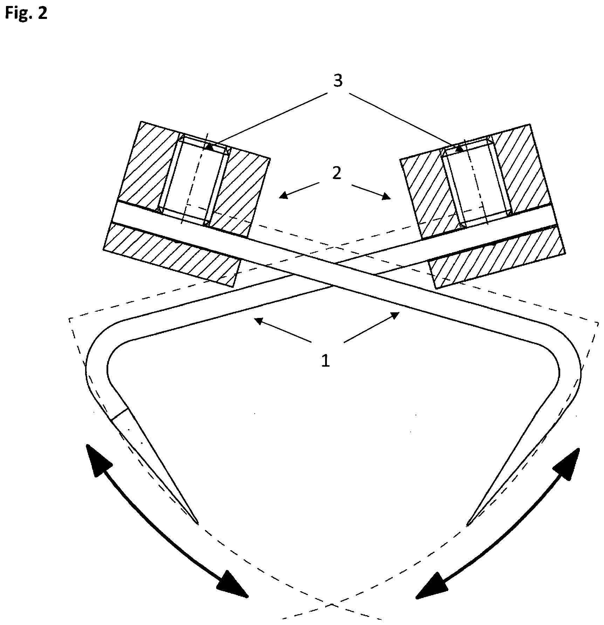

The needle gripper can be fitted with two gripping needles that are embedded in two rotating shafts performing a rotary motion (Fig. 2). Such an arrangement ensures a more secure grip of the workpiece, especially in the case of simultaneous operation of opposite shafts.

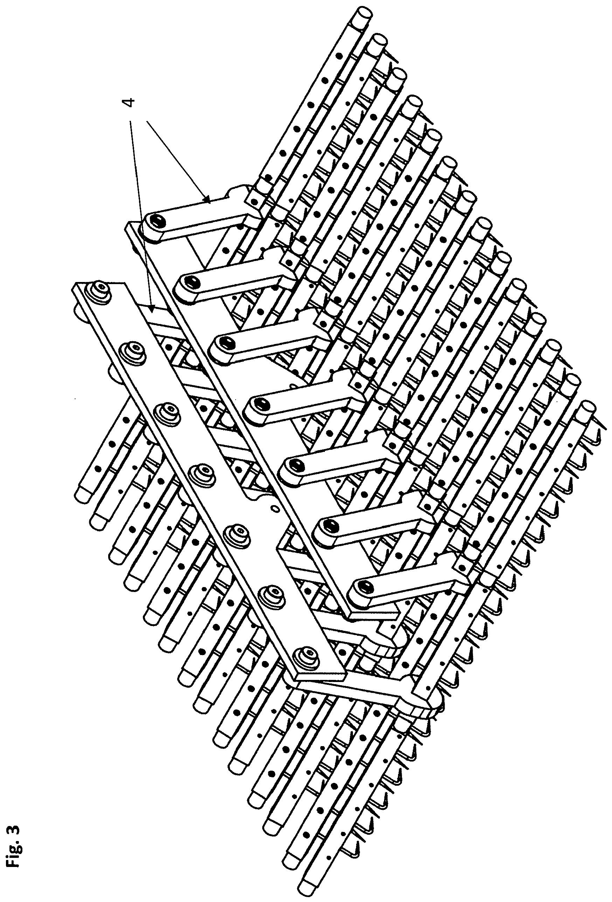

With the needle and rotary shaft being multiplied (Fig. 3), the needle gripper enables objects with a large surface area to be gripped securely. By exerting an additional force distributed inside the material, the risk of the workpiece falling out during handling is reduced.

In the case of multiple needle and rotary shaft, this solution reduces the final size and weight of the head or a machine compared to previously known needle grippers.

The needle gripper, according to the invention, in all variants can be used for gripping workpieces in the form of any sheets or shapes made of flexible plastics or textiles and their composites or food items that may be perforated.

The needle gripper, according to the invention, in all variants can be used in robots, heads and machines in which the workpiece is to be gripped and further moved, used in technological or logistic processes and operations also at elevated temperatures.

## Claims

1. A needle gripper intended for a robot, head or machine with at least one gripping needle (1), made in such a way that a straight section of the needle (1a) is inserted into a rotating shaft (2) and the attachment of this part of the needle to the shaft is ensured by at least one screw (3), while the curved section of the needle (1b) coming out of the shaft has a sharpened tip (1c) for inserting into an object.

2. The needle gripper according to claim 1, **characterized in that,** it using as screw with any kind of head.

3. The needle gripper according to claim 2, **characterized in that,** it using more than one screw for fixing the needle in the rotating shaft where the second screw is along or from both sides the a straight section of the needle.

4. The needle gripper according to claim 3, **characterized in that,** it with a rotating shaft having any polygonal or circular cross-section.

5. The needle gripper according to claim 4, **characterized in that,** it using at least two gripping needles arranged side by side in separate rotating shafts operating in opposite directions.

6. The needle gripper according to claim 5, **characterized in that,** it using more than one needle at any rotating shaft.

7. The needle gripper according to claim 6, **characterized in that,** it using more than two pairs of rotating shafts.

8. The needle gripper according to claim 7, **characterized in that,** it using a lever mechanism (4) for synchronizing the shafts.

9. The needle gripper according to claim 8, **characterized in that,** it using a pneumatic or electric or electromagnetic or mixed drive.
